# EUROPÄISCHE PATENTSCHRIFT

(11) **EP 3 277 996 B1**
(45) Veröffentlichungstag und Bekanntmachung des Hinweises auf die Patenterteilung: **29.01.2020**
(21) Anmeldenummer: 16709595.9
(22) Anmeldetag: 02.03.2016
(51) Int. Cl.: F16L 19/02, F16L 19/025, F24C 3/08, F24C 3/00

(54) **GASKOCHSTELLE MIT HAUPTGASLEITUNGSANORDNUNG**
GAS HOB WITH MAIN-GAS-LINE ARRANGEMENT
PLAQUE DE CUISSON À GAZ AVEC DISPOSITIF FORMANT CONDUIT DE GAZ PRINCIPAL

(30) Priorität: 31.03.2015 ES 201530433
(43) Veröffentlichungstag der Anmeldung: 07.02.2018
(73) Patentinhaber: BSH Hausgeräte GmbH, 81739 München (DE)
(72) Erfinder: HERRERA ESTRADA, Pedro, 39012 Santander (ES); PALACIOS VALDUEZA, Luis Antonio, 39610 Astillero (ES); PLACER MARURI,Emilio, 39120 Liencres (ES); SAIZ GONZALEZ, Roberto, 39539 Santander (ES)
(86) Internationale Anmeldenummer: PCT/IB2016/051162
(87) Internationale Veröffentlichungsnummer: WO 2016/157004

(56) Entgegenhaltungen:
- EP-A1- 1 624 183
- WO-A1-99/14525
- WO-A2-2013/175350
- DE-U1-202007 016 637
- US-A1- 2001 038 206

## Beschreibung

Die vorliegende Erfindung betrifft eine Gaskochstelle mit einer Hauptgasleitungsanordnung.

Eine Gaskochstelle kann eine Kochmuldenwanne, eine in der Kochmuldenwanne angeordnete Hauptgasleitung und mehrere an der Hauptgasleitung befestigte Gasventile aufweisen, die dazu eingerichtet sind, einen Brenngasstrom von der Hauptgasleitung zu einem jeweiligen Gasbrenner der Gaskochstelle zu regeln oder zu unterbrechen. Beim Montieren einer Gasanschlussleitung an der Hauptgasleitung kann diese, um ein Verdrehen derselben zu verhindern, während der Montage mit einem Werkzeug wie beispielsweise einer Zange fixiert werden.

Die WO 2013/175350 A2 beschreibt ein gasbeheiztes Gargerät mit zumindest einem Gasventil, welches einen Anschluss aufweist, einer Gasleitung, welche mit dem Anschluss verbunden ist, um das Gasventil mit Gas zu versorgen, einem Gehäuseteil und einem Trägerteil, welches an dem Gehäuseteil befestigt ist und die Gasleitung relativ zu dem Anschluss fixiert.

Die WO 99/14525 A1 beschreibt eine Rohrverbindung mit einem ersten Rohr, einem zweiten Rohr und einer zwischen einem Flansch des ersten Rohrs und einem Flansch des zweiten Rohrs angeordneten Dichtscheibe, wobei die Rohre mit Hilfe einer Überwurfmutter miteinander verbunden sind.

Vor diesem Hintergrund besteht eine Aufgabe der vorliegenden Erfindung darin, eine verbesserte Gaskochstelle mit einer Hauptgasleitungsanordnung zur Verfügung zu stellen.

Demgemäß wird eine Gaskochstelle umfassend eine Hauptgasleitungsanordnung vorgeschlagen. Die Hauptgasleitungsanordnung umfasst eine Hauptgasleitung, ein Anschlussstück, eine zwischen einem Flansch der Hauptgasleitung und einem Flansch des Anschlussstücks angeordnete Dichtscheibe und eine Überwurfmutter zum Verbinden der Hauptgasleitung mit dem Anschlussstück, wobei sich ein Reibschluss zwischen dem Flansch des Anschlussstücks und der Dichtscheibe von einem Reibschluss zwischen der Dichtscheibe und dem Flansch der Hauptgasleitung derart unterscheidet, dass beim Aufbringen eines Drehmoments auf das Anschlussstück die Dichtscheibe auf dem Flansch der Hauptgasleitung derart gleitet, dass das Drehmoment reduziert auf den Flansch der Hauptgasleitung übertragen wird, und wobei das Anschlussstück ein Außengewinde aufweist, in das die Überwurfmutter formschlüssig eingreift.

Dadurch, dass das Drehmoment nicht oder zumindest reduziert auf den Flansch der Hauptgasleitung übertragen wird, wird ein Verdrehen der Hauptgasleitung beim Montieren des Anschlussstücks relativ zu an der Hauptgasleitung befestigten Gasventilen verhindert. Hierdurch werden Undichtigkeiten zwischen der Hauptgasleitung und den Gasventilen verhindert. Weiterhin kann auf zusätzliches Werkzeug zum Fixieren der Hauptgasleitung verzichtet werden.

Insbesondere umfasst die Hauptgasleitungsanordnung eine Hauptgasleitung, ein Anschlussstück, eine zwischen einem Flansch der Hauptgasleitung und einem Flansch des Anschlussstücks angeordnete Dichtscheibe und eine Überwurfmutter zum Verbinden der Hauptgasleitung mit dem Anschlussstück, wobei beim Aufbringen eines Drehmoments auf das Anschlussstück die Dichtscheibe auf dem Flansch der Hauptgasleitung derart gleitet, dass das Drehmoment reduziert auf den Flansch der Hauptgasleitung übertragen wird.

Gemäß einer Ausführungsform gleitet beim Aufbringen eines Drehmoments auf das Anschlussstück die Dichtscheibe auf dem Flansch der Hauptgasleitung derart, dass das Drehmoment nicht auf den Flansch der Hauptgasleitung übertragen wird.

Das Drehmoment wird vorzugsweise auf null reduziert.

Gemäß einer weiteren Ausführungsform ist eine Oberfläche des Flansches des Anschlussstücks so modifiziert, dass ein Reibschluss zwischen dem Flansch des Anschlussstücks und der Dichtscheibe größer als ein Reibschluss zwischen der Dichtscheibe und dem Flansch der Hauptgasleitung ist, so dass das auf das Anschlussstück aufgebrachte Drehmoment von der Dichtscheibe reduziert, insbesondere nicht, auf den Flansch der Hauptgasleitung übertragen wird.

Vorzugsweise weist die Oberfläche des Flansches des Anschlussstücks eine mittlere Rauheit von Ra 5 bis Ra 10 auf. Die Oberfläche ist vorzugsweise scheibenförmig. Insbesondere ist die Rauheit der Oberfläche des Flansches des Anschlussstücks so groß, dass die Dichtscheibe auf der Oberfläche des Flansches des Anschlussstücks haftet. Gemäß einer weiteren Ausführungsform ist die Dichtscheibe aus einem Kunststoffmaterial gefertigt.

Insbesondere kann die Dichtscheibe aus einem Aramidgewebe gefertigt sein.

Gemäß einer weiteren Ausführungsform ist die mittlere Rauheit des Flansches des Anschlussstücks größer als die mittlere Rauheit des Flansches der Hauptgasleitung.

Der Flansch der Hauptgasleitung ist vorzugsweise ringförmig und umläuft ein Ende der Hauptgasleitung vollständig. Insbesondere ist der Flansch der Hauptgasleitung nicht modifiziert. Das heißt, die Hauptgasleitung ist ein Standardbauteil.

Gemäß einer weiteren Ausführungsform weist die Dichtscheibe zwei Seitenflächen auf, die die gleiche mittlere Rauheit aufweisen.

Die Dichtscheibe ist vorzugsweise dazu eingerichtet, das Anschlussstück gegenüber der Hauptgasleitung gasdicht abzudichten.

Gemäß einer weiteren Ausführungsform weisen die zwei Seitenflächen der Dichtscheibe eine kleinere mittlere Rauheit auf als der Flansch des Anschlussstücks.

Gemäß einer weiteren Ausführungsform ist das Anschlussstück um 90° gekrümmt.

Das Anschlussstück weist vorzugsweise einen ersten Abschnitt und einen zweiten Abschnitt auf, die senkrecht zueinander angeordnet sind. An dem ersten Abschnitt ist vorzugsweise der Flansch vorgesehen. An dem zweiten Abschnitt ist vorzugsweise ein Konus vorgesehen. Auf den Konus kann eine Gasanschlussleitung zum Anschließen der Hauptgasleitung an ein Gasnetz aufgesteckt werden. Eine Oberfläche oder Stirnfläche des Konus ist vorzugsweise wie die Oberfläche des Flansches des Anschlussstücks modifiziert.

Gemäß einer weiteren Ausführungsform sind an der Hauptgasleitung Gasventile angeordnet.

Die Hauptgasleitungsanordnung kann die Gasventile umfassen. Die Gasventile können stufenlos regelbar oder sogenannte Step Valves sein. Die Gasventile sind vorzugsweise an die Hauptgasleitung angeklemmt.

Gemäß einer weiteren Ausführungsform hintergreift die Überwurfmutter den Flansch der Hauptgasleitung.

Insbesondere hintergreift die Überwurfmutter den Flansch der Hauptgasleitung formschlüssig.

Die Gaskochstelle kann ein Haushaltsgargerät oder ein Teil eines Haushaltsgargeräts sein.

Weitere vorteilhafte Ausgestaltungen und Aspekte der Gaskochstelle sind Gegenstand der Unteransprüche sowie der im Folgenden beschriebenen Ausführungsbeispiele der Gaskochstelle. Im Weiteren werden die Hauptgasleitungsanordnung und/oder die Gaskochstelle anhand von bevorzugten Ausführungsformen unter Bezugnahme auf die beigelegten Figuren näher erläutert.
Fig. 1 zeigt eine schematische perspektivische Ansicht einer Ausführungsform einer Gaskochstelle;
Fig. 2 zeigt eine weitere schematische perspektivische Ansicht der Gaskochstelle;
Fig. 3 zeigt eine schematische Schnittansicht der Gaskochstelle gemäß der Fig. 1;
Fig. 4 zeigt eine schematische Explosionsansicht einer Ausführungsform einer Hauptgasleitungsanordnung für die Gaskochstelle gemäß der Fig. 1;
Fig. 5 zeigt eine schematische perspektivische Ansicht einer Ausführungsform eines Anschlussstücks für die Hauptgasleitungsanordnung gemäß der Fig. 4; und
Fig. 6 zeigt eine schematische Schnittansicht des Anschlussstücks gemäß der Fig. 5.

In den Figuren sind gleiche oder funktionsgleiche Elemente mit denselben Bezugszeichen versehen worden, sofern nichts anderes angegeben ist.

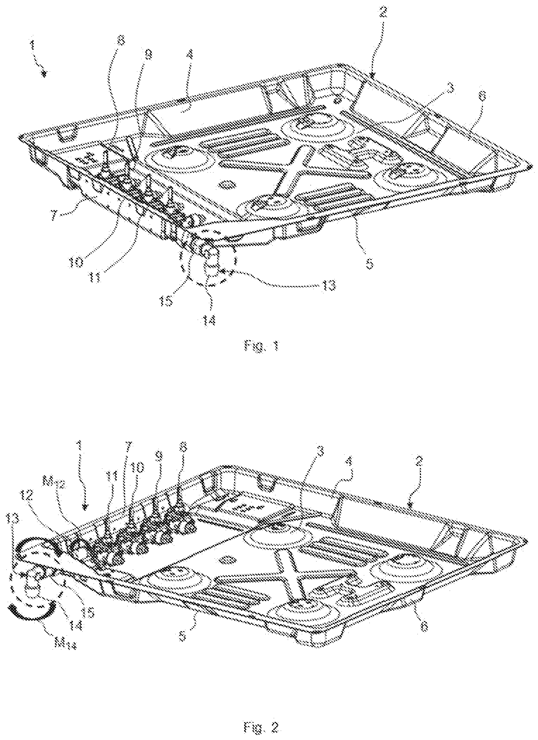

Die Fig. 1 zeigt eine schematische perspektivische Ansicht einer Gaskochstelle 1. Die Fig. 2 zeigt eine weitere schematische perspektivische Ansicht der Gaskochstelle 1. Die Gaskochstelle 1 kann ein Haushaltsgargerät oder ein Teil eines Haushaltsgargerätes sein. Die Gaskochstelle 1 kann mehrere in den Fig. 1 und 2 nicht gezeigte Gasbrenner aufweisen.

Die Gaskochstelle 1 umfasst ferner eine Kochmuldenwanne 2, welche vorzugsweise aus einem Metallblech gefertigt ist. Die Kochmuldenwanne 2 weist einen Boden 3, zwei einander gegenüberliegend angeordnete Seitenwände 4, 5, eine Rückwand 6 und eine Vorderwand 7 auf. Die Gasbrenner können in der Kochmuldenwanne 2 angeordnet sein und über eine in den Fig. 1 und 2 nicht gezeigte Deckplatte oder ein sogenanntes Top Sheet herausragen.

Die Gaskochstelle 1 weist weiterhin zumindest ein Gasventil 8 bis 11 auf. Die Anzahl der Gasventile 8 bis 11 ist beliebig. Jedem Gasbrenner ist ein Gasventil 8 bis 11 zugeordnet. Die Gasventile 8 bis 11 sind benachbart zu der Vorderwand 7 angeordnet. Die Gasventile 8 bis 11 sind dazu eingerichtet, einen Brenngasstrom von einer Hauptgasleitung 12 der Gaskochstelle 1 zu einem dem jeweiligen Gasventil 8 bis 11 zugeordneten Gasbrenner zu regeln oder abzusperren. Die Gasventile 8 bis 11 können als stufenlose Gasventile oder als gestufte Gasventile, als sogenannte Step Valves, ausgebildet sein. Die Gasventile 8 bis 11 sind vorzugsweise an die Hauptgasleitung 12 angeklemmt.

Die Gaskochstelle 1 umfasst weiterhin eine Hauptgasleitungsanordnung 13, die die Hauptgasleitung 12 und ein Anschlussstück 14 umfasst. Die Hauptgasleitungsanordnung 13 umfasst weiterhin eine Überwurfmutter 15 zum Verbinden der Hauptgasleitung 12 mit dem Anschlussstück 14. Die Hauptgasleitung 12 wird von außerhalb der Kochmuldenwanne 2 durch einen Durchbruch in das Innere der Kochmuldenwanne 2 geführt. Das vorzugsweise winkelförmige Anschlussstück 14 kann durch eine Drehbewegung in die Überwurfmutter 15 eingeschraubt werden. Alternativ kann das Anschlussstück 14 festgehalten und die Überwurfmutter 15 auf das Anschlussstück 14 aufgeschraubt werden. Hierbei wird auf das Anschlussstück 14 ein Drehmoment M₁₄ aufgebracht. Die Hauptgasleitungsanordnung 13 ist dazu eingerichtet, das Drehmoment M₁₄ zu reduzieren, insbesondere nicht auf die Hauptgasleitung 12 zu übertragen. Beim Montieren des Anschlussstücks 14 wird auf die Hauptgasleitung 12 maximal ein Drehmoment M₁₂ übertragen, das deutlich kleiner als das Drehmoment M₁₄ ist.

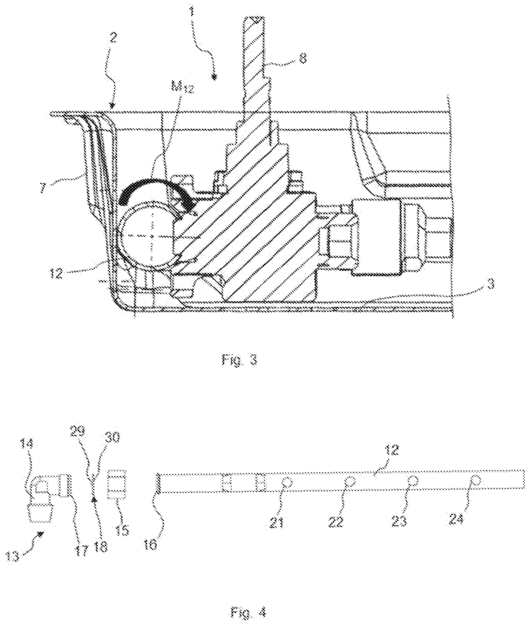

Die Fig. 3 zeigt die Gaskochstelle 1 in einer Schnittansicht. Wie die Fig. 3 zeigt, sind die Gasventile 8 bis 11 an die Hauptgasleitung 12 angeklemmt. Das Drehmoment M₁₂ ist dabei kleiner als das Drehmoment M₁₄. Vorzugsweise ist das Drehmoment M₁₂ annähernd oder gleich Null.

Die Fig. 4 zeigt die Hauptgasleitungsanordnung 13 in einer schematischen Explosionsansicht. Die Hauptgasleitungsanordnung 13 weist neben der Hauptgasleitung 12, dem winkelförmigen Anschlussstück 14 und der Überwurfmutter 15 zum Verbinden der Hauptgasleitung 12 mit dem Anschlussstück 14 eine zwischen einem Flansch 16 der Hauptgasleitung 12 und einem Flansch 17 des Anschlussstücks 14 angeordnete Dichtscheibe 18 auf. Die Dichtscheibe 18 ist vorzugsweise aus einem Kunststoffmaterial gefertigt. Beispielsweise kann die Dichtscheibe 18 auf Basis von Aramidfasern gefertigt sein. Insbesondere kann die Dichtscheibe 18 aus dem Material AFM 34 der Firma Victor Reinz gefertigt sein. Der Flansch 16 der Hauptgasleitung 12 ist vorzugsweise ringförmig und umläuft einen Endabschnitt der Hauptgasleitung 12 vollständig. Der Flansch 17 des Anschlussstücks 14 ist vorzugsweise scheibenförmig.

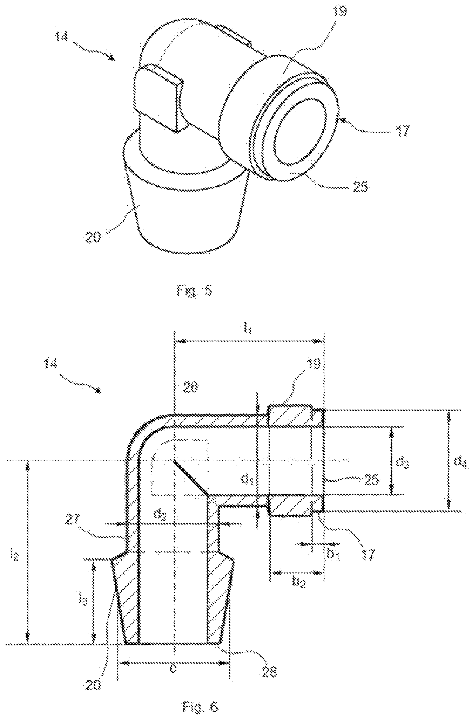

Die Fig. 5 zeigt das Anschlussstück 14 in einer schematischen perspektivischen Ansicht. Das Anschlussstück 14 weist ein Außengewinde 19 auf, in das die Überwurfmutter 15 formschlüssig eingreift. Das Anschlussstück 14 ist vorzugsweise um 90° gekrümmt. Ein Endabschnitt des Anschlussstücks 14 ist mit einem Konus 20 ausgebildet. Auf dem Konus 20 kann eine Gasanschlussleitung aufgeschoben werden. Mit Hilfe der Gasanschlussleitung ist die Hauptgasleitung 12 an ein Gasnetz anschließbar.

Beim Aufbringen des Drehmoments M₁₄ auf das Anschlussstück 14 gleitet die Dichtscheibe 18 auf dem Flansch 16 der Hauptgasleitung 12 derart, dass das Drehmoment M₁₄ reduziert, insbesondere nicht auf den Flansch 16 der Hauptgasleitung 12 übertragen, wird. Hierdurch wird beim Einschrauben des Anschlussstücks 14 in die Überwurfmutter 15 bzw. beim Aufschrauben der Überwurfmutter 15 auf das Außengewinde 19 des Anschlussstücks 14 kein oder nur ein geringes Drehmoment M₁₂ auf die Hauptgasleitung 12 übertragen. Hierdurch werden Undichtigkeiten der Klemmverbindung der Gasventile 8 bis 11 mit der Hauptgasleitung 12 verhindert, da eine Relativbewegung der Hauptgasleitung 12 relativ zu den Gasventilen 8 bis 11 unterbunden wird. Zum Anklemmen der Gasventile 8 bis 11 an die Hauptgasleitung 12 sind an dieser Bohrungen 21 bis 24 vorgesehen.

Insbesondere ist eine Oberfläche 25 (Fig. 5) des Flansches 17 des Anschlussstücks 14 so modifiziert, dass ein Reibschluss zwischen dem Flansch 17 des Anschlussstücks 14 und der Dichtscheibe 18 größer als ein Reibschluss zwischen der Dichtscheibe 18 und dem Flansch 16 der Hauptgasleitung 12 ist, so dass das auf das Anschlussstück 14 aufgebrachte Drehmoment M₁₄ von der Dichtscheibe 18 nicht oder nur teilweise auf den Flansch 16 der Hauptgasleitung 12 übertragen wird. Das heißt, die Dichtscheibe 18 rutscht auf dem Flansch 16 der Hauptgasleitung 12, während sie auf dem Flansch 17 des Anschlussstücks 14 haftet.

Die Fig. 6 zeigt das Anschlussstück 14 in einer schematischen Schnittansicht. Das gewinkelte Anschlussstück 14 weist eine horizontale Länge l₁ und eine vertikale Länge l₂ auf. Die Länge l₁ beträgt beispielsweise 27 mm, die Länge l₂ beträgt beispielsweise 33 mm. Der Konus 20 weist eine Konuslänge l₃ auf. Die Konuslänge l₃ beträgt beispielsweise 15 mm. Der Konus 20 weist nach ISO R7 eine Konizität c von einem halben Zoll auf. Das Anschlussstück 14 weist ferner einen ersten Abschnitt 26 mit der Länge l₁ und einen zweiten Abschnitt 27 mit der Länge l₂ auf. Die Abschnitte 26, 27 sind rohrförmig und sind senkrecht zueinander positioniert. Der erste Abschnitt 26 weist einen Durchmesser d₁ auf. Der zweite Abschnitt 27 weist einen Durchmesser d₂ auf. Die Durchmesser d₁ und d₂ betragen beispielsweise 16,5 mm.

Das Außengewinde 19 des Anschlussstücks 14 ist beispielsweise ein Halbzollgewinde nach ISO 228. Der Flansch 17 des Anschlussstücks 14 weist eine Breite b₁ auf. Die Breite b₁ beträgt beispielsweise 2 mm. Das Außengewinde 19 und der Flansch 17 zusammen weisen eine Breite b₂ auf. Die Breite b₂ beträgt beispielsweise 8,6 mm. Der Flansch 17 weist weiterhin einen Innendurchmesser d₃ und einen Außendurchmesser d₄ auf. Der Innendurchmesser d₃ beträgt beispielsweise 12,4 ± 0,1 mm. Der Außendurchmesser d₄ beträgt beispielsweise 18,4 ± 0,1 mm.

Die Oberfläche 25 des Flansches 17 des Anschlussstücks 14 ist so modifiziert, dass die Dichtscheibe 18 beim Aufschrauben der Überwurfmutter 15 auf das Außengewinde 19 nicht auf der Oberfläche 25 abrutscht. Beispielsweise weist die Oberfläche 25 des Flansches 17 einen unteren Grenzwert von Ra 5 und einen oberen Grenzwert von Ra 10 einer mittleren Rauheit oder Mittenrauheit Ra₁₇ auf. Auch eine endseitige Oberfläche 28 des Konus 20 des Anschlussstücks 14 weist einen unteren Grenzwert einer Mittenrauheit Ra₂₀ von Ra 5 und einen oberen Grenzwert von Ra 10 auf. Vorzugsweise ist eine Mittenrauheit Ra₁₇ des Flansches 17 des Anschlussstücks 14 größer als eine mittlere Rauheit Ra₁₆ des Flansches 16 der Hauptgasleitung 12. Die Dichtscheibe 18 weist zwei Seitenflächen 29, 30 (Fig. 4) auf, die eine identische Mittenrauheit Ra₁₈ aufweisen, die vorzugsweise kleiner ist als die Mittenrauheit Ra₁₇ der Oberfläche 25.

### Verwendete Bezugszeichen:

- 1: Gaskochstelle
- 2: Kochmuldenwanne
- 3: Boden
- 4: Seitenwand
- 5: Seitenwand
- 6: Rückwand
- 7: Vorderwand
- 8: Gasventil
- 9: Gasventil
- 10: Gasventil
- 11: Gasventil
- 12: Hauptgasleitung
- 13: Hauptgasleitungsanordnung
- 14: Anschlussstück
- 15: Überwurfmutter
- 16: Flansch
- 17: Flansch
- 18: Dichtscheibe
- 19: Außengewinde
- 20: Konus
- 21: Bohrung
- 22: Bohrung
- 23: Bohrung
- 24: Bohrung
- 25: Oberfläche
- 26: Abschnitt
- 27: Abschnitt
- 28: Oberfläche
- 29: Seitenfläche
- 30: Seitenfläche

- b₁: Breite
- b₂: Breite
- c: Konizität
- d₁: Durchmesser
- d₂: Durchmesser
- d₃: Durchmesser
- d₄: Durchmesser
- l₁: Länge
- l₂: Länge
- l₃: Länge
- M₁₂: Drehmoment
- M₁₄: Drehmoment
- Ra₁₆: mittlere Rauheit
- Ra₁₇: mittlere Rauheit
- Ra₂₀: mittlere Rauheit

## Patentansprüche

1. Gaskochstelle (1) umfassend eine Hauptgasleitungsanordnung (13) mit einer Hauptgasleitung (12), einem Anschlussstück (14), einer zwischen einem Flansch (16) der Hauptgasleitung (12) und einem Flansch (17) des Anschlussstücks (14) angeordneten Dichtscheibe (18) und einer Überwurfmutter (15) zum Verbinden der Hauptgasleitung (12) mit dem Anschlussstück (14), wobei sich ein Reibschluss zwischen dem Flansch (17) des Anschlussstücks (14) und der Dichtscheibe (18) von einem Reibschluss zwischen der Dichtscheibe (18) und dem Flansch (16) der Hauptgasleitung (12) derart unterscheidet, dass beim Aufbringen eines Drehmoments (M₁₄) auf das Anschlussstück (14) die Dichtscheibe (18) auf dem Flansch (16) der Hauptgasleitung (12) derart gleitet, dass das Drehmoment (M₁₄) reduziert auf den Flansch (16) der Hauptgasleitung (12) übertragen wird, und wobei das Anschlussstück (14) ein Außengewinde (19) aufweist, in das die Überwurfmutter (15) formschlüssig eingreift.

2. Gaskochstelle nach Anspruch 1, **dadurch gekennzeichnet, dass** beim Aufbringen eines Drehmoments (M₁₄) auf das Anschlussstück (14) die Dichtscheibe (18) auf dem Flansch (16) der Hauptgasleitung (12) derart gleitet, dass das Drehmoment (M₁₄) nicht auf den Flansch (16) der Hauptgasleitung (12) übertragen wird.

3. Gaskochstelle nach Anspruch 1 oder 2, **dadurch gekennzeichnet, dass** eine Oberfläche (25) des Flansches (17) des Anschlussstücks (14) so modifiziert ist, dass der Reibschluss zwischen dem Flansch (17) des Anschlussstücks (14) und der Dichtscheibe (18) größer als der Reibschluss zwischen der Dichtscheibe (18) und dem Flansch (16) der Hauptgasleitung (12) ist, so dass das auf das Anschlussstück (14) aufgebrachte Drehmoment (M₁₄) von der Dichtscheibe (18) reduziert auf den Flansch (16) der Hauptgasleitung (12) übertragen wird.

4. Gaskochstelle nach einem der Ansprüche 1 - 3, **dadurch gekennzeichnet, dass** die Dichtscheibe (18) aus einem Kunststoffmaterial gefertigt ist.

5. Gaskochstelle nach einem der Ansprüche 1 - 4, **dadurch gekennzeichnet, dass** die mittlere Rauheit (Ra₁₇) des Flansches (17) des Anschlussstücks (14) größer als die mittlere Rauheit (Ra₁₆) des Flansches (16) der Hauptgasleitung (12) ist.

6. Gaskochstelle nach einem der Ansprüche 1 - 5, **dadurch gekennzeichnet, dass** die Dichtscheibe (18) zwei Seitenflächen (29, 30) aufweist, die die gleiche mittlere Rauheit (Ra₁₈) aufweisen.

7. Gaskochstelle nach Anspruch 6, **dadurch gekennzeichnet, dass** die zwei Seitenflächen (29, 30) der Dichtscheibe (18) eine kleinere mittlere Rauheit (Ra₁₈) aufweisen als der Flansch (17) des Anschlussstücks (14).

8. Gaskochstelle nach einem der Ansprüche 1 - 7, **dadurch gekennzeichnet, dass** das Anschlussstück (14) um 90° gekrümmt ist.

9. Gaskochstelle nach einem der Ansprüche 1 - 8, **dadurch gekennzeichnet, dass** an der Hauptgasleitung (12) Gasventile (8 -11) angeordnet sind.

10. Gaskochstelle nach einem der Ansprüche 1 - 9, **dadurch gekennzeichnet, dass** die Überwurfmutter (15) den Flansch (16) der Hauptgasleitung (12) hintergreift.

## Claims

1. Gas hob (1) comprising a main gas line arrangement (13) with a main gas line (12), a connecting piece (14), a sealing washer (18) arranged between a flange (16) of the main gas line (12) and a flange (17) of the connecting piece (14), and a union nut (15) for connecting the main gas line (12) to the connecting piece (14), wherein a frictional engagement between the flange (17) of the connecting piece (14) and the sealing washer (18) differs from a frictional engagement between the sealing washer (18) and the flange (16) of the main gas line (12) such that upon application of a torque (M₁₄) to the connecting piece (14) the sealing washer (18) slides on the flange (16) of the main gas line (12) such that the torque (M₁₄) is transmitted to a reduced extent to the flange (16) of the main gas line (12), and wherein the connecting piece (14) has an external thread (19), into which the union nut (15) engages positively.

2. Gas hob according to claim 1, **characterised in that** upon application of a torque (M₁₄) to the connecting piece (14), the sealing washer (18) slides on the flange (16) of the main gas line (12) such that the torque (M₁₄) is not transmitted to the flange (16) of the main gas line (12).

3. Gas hob according to claim 1 or 2, **characterised in that** a surface (25) of the flange (17) of the connecting piece (14) is modified such that the frictional engagement between the flange (17) of the connecting piece (14) and the sealing washer (18) is greater than the frictional engagement between the sealing washer (18) and the flange (16) of the main gas line (12), such that the torque (M₁₄) applied to the connecting piece (14) is transmitted to a reduced extent from the sealing washer (18) to the flange (16) of the main gas line (12).

4. Gas hob according to one of claims 1-3, **characterised in that** the sealing washer (18) is manufactured from a plastic material.

5. Gas hob according to one of claims 1-4, **characterised in that** the mean roughness (Ra₁₇) of the flange (17) of the connecting piece (14) is greater than the mean roughness (Ra₁₆) of the flange (16) of the main gas line (12).

6. Gas hob according to one of claims 1-5, **characterised in that** the sealing washer (18) has two lateral surfaces (29, 30) which have the same mean roughness (Ra₁₈).

7. Gas hob according to claim 6, **characterised in that** the two lateral surfaces (29, 30) of the sealing washer (18) have a smaller mean roughness (Ra₁₈) than the flange (17) of the connecting piece (14).

8. Gas hob according to one of claims 1-7, **characterised in that** the connecting piece (14) is curved by 90°.

9. Gas hob according to one of claims 1-8, **characterised in that** gas valves (8-11) are arranged on the main gas line (12).

10. Gas hob according to one of claims 1-9, **characterised in that** the union nut (15) engages behind the flange (16) of the main gas line (12).

## Revendications

1. Poste de cuisson à gaz (1) comprenant un agencement de conduite de gaz principale (13) avec une conduite de gaz principale (12), un raccord (14), une rondelle d'étanchéité (18) disposée entre un flasque (16) de la conduite de gaz principale (12) et un flasque (17) du raccord (14) et un écrou-raccord (15) pour relier la conduite de gaz principale (12) au raccord (14), dans lequel une liaison par friction entre le flasque (17) du raccord (14) et de la rondelle d'étanchéité (18) se distingue de telle façon d'une liaison par friction entre la rondelle d'étanchéité (18) et le flasque (16) de la conduite de gaz principale (12) que lors de l'exercice d'un moment de rotation (M₁₄) sur le raccord (14), la rondelle d'étanchéité (18) glisse de telle façon sur le flasque (16) de la conduite de gaz principale (12) que le moment de rotation (M₁₄) est transmis de façon réduite sur le flasque (16) de la conduite de gaz principale (12), et dans lequel le raccord (14) présente un filetage externe (19) dans lequel l'écrou-raccord (15) s'engrène par complémentarité de formes.

2. Poste de cuisson à gaz selon la revendication 1, **caractérisé en ce que** lors de l'exercice d'un moment de rotation (M₁₄) sur le raccord (14), la rondelle d'étanchéité (18) glisse de telle façon sur le flasque (16) de la conduite de gaz principale (12) que le moment de rotation (M₁₄) ne se transmet pas au flasque (16) de la conduite de gaz principale (12).

3. Poste de cuisson à gaz selon la revendication 1 ou 2, **caractérisé en ce qu'**une surface (25) du flasque (17) du raccord (14) est modifiée de telle sorte que la liaison par friction entre le flasque (17) du raccord (14) et de la rondelle d'étanchéité (18) est supérieure à la liaison par friction entre la rondelle d'étanchéité (18) et le flasque (16) de la conduite de gaz principale (12), de sorte que le moment de rotation (M₁₄) exercé sur le raccord (14) est transmis de façon réduite par la rondelle d'étanchéité (18) sur le flasque (16) de la conduite de gaz principale (12).

4. Poste de cuisson à gaz selon l'une des revendications 1 à 3, **caractérisé en ce que** la rondelle d'étanchéité (18) est fabriquée en un matériau plastique.

5. Poste de cuisson à gaz selon l'une des revendications 1 à 4, **caractérisé en ce que** la rugosité moyenne (Ra₁₇) du flasque (17) du raccord (14) est supérieure à la rugosité moyenne (Ra₁₆) du flasque (16) de la conduite de gaz principale (12).

6. Poste de cuisson à gaz selon l'une des revendications 1 à 5, **caractérisé en ce que** la rondelle d'étanchéité (18) présente deux surfaces latérales (29, 30) dont la rugosité moyenne (Ra₁₈) est identique.

7. Poste de cuisson à gaz selon la revendication 6, **caractérisé en ce que** les deux surfaces latérales (29, 30) de la rondelle d'étanchéité (18) présentent une rugosité moyenne (Ra₁₈) inférieure à celle du flasque (17) du raccord (14).

8. Poste de cuisson à gaz selon l'une des revendications 1 à 7, **caractérisé en ce que** le raccord (14) est courbé à 90°.

9. Poste de cuisson à gaz selon l'une des revendications 1 à 8, **caractérisé en ce que** des soupapes à gaz (8 - 11) sont disposées sur la conduite de gaz principale (12).

10. Poste de cuisson à gaz selon l'une des revendications 1 à 9, **caractérisé en ce que** l'écrou-raccord (15) s'engage derrière le flasque (16) de la conduite de gaz principale (12).
